Europäisches Patentamt

European Patent Office

Office européen des brevets

(19)

(11) Publication number: **0 413 826 A1**

(12) **EUROPEAN PATENT APPLICATION**
published in accordance with Art.
158(3) EPC

(21) Application number: 90903918.2

(22) Date of filing: 28.02.90

(86) International application number:
PCT/JP90/00254

(87) International publication number:
WO 90/09864 (07.09.90 90/21)

(51) Int. Cl.5: **B23K 26/08**

(30) Priority: 02.03.89 JP 48473/89

(43) Date of publication of application:
27.02.91 Bulletin 91/09

(84) Designated Contracting States:
**DE FR GB**

(71) Applicant: **FANUC LTD.**
**3580, Shibokusa Aza-Komamba Oshino-mura**
**Minamitsuru-gun, Yamanashi 401-05(JP)**

(72) Inventor: **TORII, Nobutoshi**
**Fuyo Haitsu 308, 64-4,Takakura-cho**
**Hachioji-shi Tokyo 192(JP)**
Inventor: **ITO, Susumu**
**FANUC M.H. 7-204, 3539-1,Shibokusa,**
**Oshino-mura**
**Minamitsuru-gun Yamanashi 401(JP)**
Inventor: **TERADA, Akihiro**
**FANUC M.H. 8-207, 3511-1, Shibokusa,**
**Oshino-mura**
**Minamitsuru-gun Yamanashi 401-05(JP)**

(74) Representative: **Mock, Hans et al**
**MARKS & CLERK Suite 301 Sunlight House**
**Quay Street**
**Manchester M3 3JY(GB)**

(54) **METHOD AND APPARATUS FOR LASER MACHINING USING NON-AXISYMMETRIC PARABOLIC REFLECTOR.**

(57) A laser machining apparatus includes laser beam paths (20, 42, 46) for guiding a laser beam from a source of laser beam to a predetermined entrance path, non-axisymmetric parabolic reflectors (22, 50) having a parabolic reflecting plane (24) for receiving an incident laser beam from the laser beam paths (20,42,46), holding members (74,90) for maintaining the parabolic reflectors (22, 50) in a predetermined attitude and a predetermined bearing, and drive means (80, $M_6$, $M_7$) for moving the para-bolic reflectors (22, 50) held by the holding mem-bers (74, 90) along a circular locus in a plane includ-ing the optical axis of the incident laser beam or another plane being in parallel with the above plane. The focal point of the laser beam reflected by the parabolic reflectors (22, 50) is moved on the surface (32) to be machined along the circuit locus having the same diameter as that of the moving circular locus of the parabolic reflectors (22, 50).

# Fig. 4

## METHOD OF AND APPARATUS FOR LASER BEAM MACHINING EMPLOYING AN OFF-AXIS PARABOLIC REFLECTOR

TECHNICAL FIELD

The present invention relates to a laser beam machining method employing an off-axis parabolic reflector, and a laser beam machining apparatus for carrying out this method.

More particularly, the present invention relates to a laser beam machining apparatus employing an off-axis parabolic reflector incorporated into a multi-articulated industrial robot and capable of forming a highly accurate small bore through laser beam machining by precisely moving the focus of a high-energy laser beam along a circular locus, and a laser beam machining method using the laser beam machining apparatus.

BACKGROUND ART

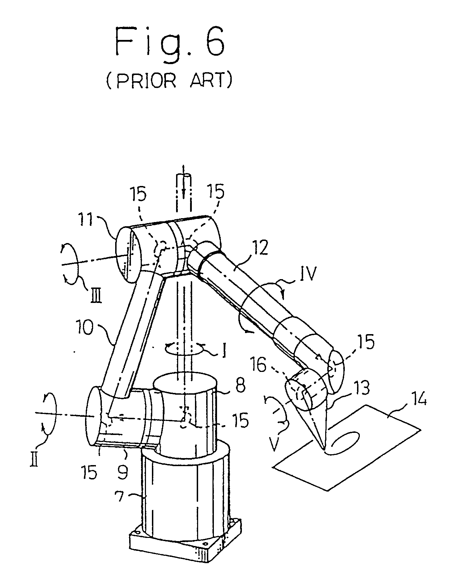

Recent improvements in the accuracy of controlling the motions of industrial robots have made possible the widespread application of multi-articulated industrial robots as laser robots to laser beam machining, including cutting and welding, in which a laser beam emitted by a laser beam source is introduced into the robot unit of a multi-articulated robot, the laser beam is guided to a condenser mirror provided on the front end of the endmost robot arm by a light conduit line formed within the robot unit and reflecting mirrors provided within the robot unit, and then the reflected and condensed laser beam is projected through a nozzle and focused on the surface of a workpiece for laser beam machining. When carrying out the laser beam machining, the motions of the movable elements of the multi-articulated robot including a robot body and articulated robot arms are controlled according to a program by a robot controller, to move the tip of the nozzle along a desired path relative to the workpiece, such as a metal plate for laser beam machining, to cut the work to a desired shape or to weld along a desired weld line. A five-axis articulated robot having a robot unit having a five-degrees-of-freedom construction, in particular, is capable of moving a laser beam projecting nozzle along various courses in a three-dimensional space and is suitable for industrial use. Figure 6 shows the external construction and degree of freedom of motion of the five-axis articulated laser robot in a perspective view. This five-axis articulated laser robot comprises a robot base 7, a swivel robot body 8 mounted on the robot base 7 for turning about a vertical first axis I, a shoulder joint 9 attached to the side surface of the swivel robot body 8 for turning about a second axis II, a first robot arm 10 extending upward from one end of the shoulder joint 9, and a second robot arm 12 joined by an elbow joint 11 to the front end of the first robot arm 10. The second robot arm 12 is able to turn on the elbow joint 11 about a third axis III relative to the first robot arm 10, and is able to rotate about its own axis, i.e., a fourth axis IV. A laser beam projecting nozzle 13 is joined for rotation about a fifth axis V to the front end of the second robot arm 12. The turning motions of these robot elements respectively about the axis I through the axis V enables the laser beam projected through the nozzle 13 to be moved along a desired locus L on a workpiece 14, for a laser beam machining such as cutting or welding. The laser beam emitted by a laser beam source is introduced into the swivel robot body 8, and is deflected by a plurality of reflecting mirrors 15 provided on the robot elements, to travel through the shoulder joint 9, the first robot arm 10, the elbow joint 11 and the second robot arm 12 to the nozzle 13, and then the laser beam is focused and projected on a desired point by a condensing mirror 16 provided on the laser beam projecting nozzle 13.

Nevertheless, when forming a small bore having a diameter of on the order of several millimeters, in an objective surface of a workpiece such as a plate, due to a laser beam machining by the foregoing laser robot, the movable robot elements, such as the robot arms, must be accurately and rapidly operated, and further, the turning motions of the joints, such as the joints of the robot arms, must be reversed at a high rate; otherwise it is difficult to move the laser beam projecting nozzle along a desired locus. Furthermore, the movable elements, such as the robot arms, must have a high mechanical rigidity sufficient to be moved accurately for quick motions. Therefore, the robot controller must perform a very complicated, difficult motion control, and it is possible that the laser beam machining cannot be achieved with a satisfactory precision.

Another boring method, and a mechanism for carrying out the same, have been proposed. This boring method employs a special compass operating unit mounted on the extremity of the endmost movable member of a five-axis laser robot, adjusts the compass diameter, and makes the compass operating unit perform a compass action along a circular locus abut a sixth axis. This mechanism, however, has a very complicated configuration, the compass operating unit requires a plurality of additional reflecting mirrors for reflecting the laser beam, and the additional reflecting mirrors attenuate the energy of the laser beam, and thus the machining capability of the mechanism is lowered.

DISCLOSURE OF THE INVENTION

Accordingly, an object of the present invention is to provide a laser beam machining method and a laser beam machining apparatus capable of readily forming a small bore which has been difficult to form when using the conventional laser robot.

Another object of the present invention is to provide a laser beam machining method and a laser beam machining apparatus employing a generally known off-axis parabolic reflector to move the focus of a laser beam along a circular locus of a small diameter.

A further object of the present invention is to provide a laser beam machining apparatus including an off-axis parabolic reflector, to be incorporated into an articulated industrial laser robot to enable the articulated industrial laser robot to readily form a small bore by laser beam machining.

In one aspect of the present invention, to achieve the foregoing objects, a laser beam machining method employing an off-axis parabolic reflector comprises emitting a laser beam by a laser beam source along an optical path so that the laser beam falls on an off-axis parabolic reflector, focusing the laser beam reflected by the off-axis parabolic reflector on an objective surface of a workpiece, and moving the off-axis parabolic reflector along a circular locus included in a plane including the optical axis of the incident laser beam or in a plane parallel to the former plane, without changing the posture and orientation thereof, to move the focus of the reflected laser beam for machining on the objective surface of the workpiece along a circular locus of a diameter equal to that of the circular locus along which the off-axis parabolic reflector is moved.

In another aspect of the present invention, a laser beam machining apparatus employing an off-axis parabolic reflector comprises a laser beam path means for guiding a laser beam emitted by a laser along a fixed path of incidence, an off-axis parabolic reflector having a parabolic reflecting surface to receive the incident laser beam through the laser beam path means, a mirror holding unit for holding the mirror body of the off-axis parabolic reflector in a fixed posture and orientation, and drive means for moving the off-axis reflector held by the mirror holding unit along a circular locus included in a plane including the optical axis of the incident laser beam or in a plane parallel to the former plane, whereby the focus of the reflected laser beam reflected by the off-axis parabolic reflector is moved for machining on an objective surface of a workpiece along a circular locus of a diameter equal to that of the circular locus along which the off-axis parabolic reflector is moved. The laser beam path means of the laser beam machining apparatus includes an optical conduit formed through a five-axis articulated industrial robot, and the reflecting mirrors, the off-axis parabolic reflector, the mirror holding unit, and the drive means are contained and held in the extremity of the robot arm of the multi-articulated industrial robot, to thereby construct a laser robot.

As stated above, the off-axis parabolic reflector is used for focusing a laser beam, and the off-axis parabolic reflector is moved along a circular locus of a small diameter in a plane including the optical axis of the laser beam or in a plane parallel to the former plane, with the posture and orientation of the off-axis parabolic reflector fixed, to move the focus of the laser beam along a circular locus of a diameter equal to that of the circular locus along which the off-axis parabolic reflector is moved to form a small bore in a surface located in the focal plane on which the laser beam is focused. The laser robot provided with the off-axis parabolic reflector on the extremity of the endmost robot element is able to carry out an operation for forming a small bore without moving the movable robot elements thereof, including the robot arms, and is able to carry out usual laser beam machining operations by controlling the motions of the movable robot elements, and thus the present invention improves the functions of the laser robot.

BRIEF DESCRIPTION OF THE DRAWINGS

The above and other objects, features and advantages of the present invention will be described hereinafter with reference to preferred embodiments shown in the accompanying drawings, wherein:

Figure 1 is a schematic perspective view of assistance in explaining an operating principle on which a laser beam machining method according to the present invention, employing an off-axis parabolic reflector, is based;

Figure 2 is a fragmentary perspective view of assistance in explaining the arrangement and general constitution of a laser beam machining apparatus embodying the present invention and provided on the extremity of the endmost robot component of an articulated laser robot;

Figure 3 is a fragmentary sectional view of internal mechanisms provided in the extremity of the endmost robot component of the laser robot shown in Fig. 2;

Figure 4 is an enlarged sectional view of a laser beam machining apparatus;

Figure 5 is an exploded perspective view showing the components of a parallel linkage, and circular-locus tracking and drive means including an eccentric rotary means and circular locus adjusting means, incorporated into the laser beam machining apparatus; and

Figure 6 is a perspective view of a conventional five-axis articulated laser robot, showing the configuration and degree of freedom of motion.

BEST MODE OF CARRYING OUT THE INVENTION

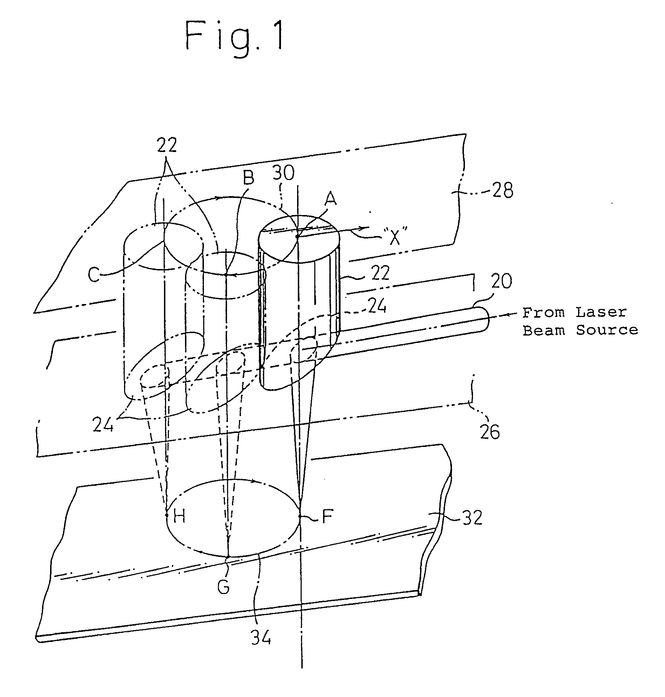

Referring to Fig. 1, according to a principle on which a laser beam machining method in accordance with the present invention is based, a laser beam emitted by a laser beam source and transmitted through suitable intermediate laser beam conduits, not shown, travels along a final laser beam path unit 20 and is incident on an off-axis parabolic reflector 22. The reflecting surface of the off-axis parabolic reflector 22 reflects and focuses the laser beam to a focal point for a desired laser beam machining, such as cutting, by the energy of the focused laser beam. The laser beam transmitted through the laser beam path unit 20 travels invariably in a fixed direction and is incident on the reflecting surface 24 of the off-axis parabolic reflector 22. Since the off-axis parabolic reflecting surface 24 is a portion of a parabolic mirror surface, the laser beam reflected by the reflecting surface 24 is focused on the focus F of the parabolic mirror surface, and accordingly, the high energy of the laser beam is concentrated on the focus F. The off-axis parabolic reflector 22 is moved while the laser beam path unit 20 is held fixed. More specifically, the off-axis parabolic reflector 22 is moved along a circular locus 30 in an imaginary plane 28 parallel to another imaginary plane 26 including the optical axis of the laser beam, while the posture and orientation of the off-axis parabolic reflector 22 are fixed so that the laser beam traveling along the laser beam path unit 20 is able to be incident continuously on a portion of the reflecting surface 24. The posture and orientation of the off-axis parabolic reflector 22 are fixed by holding unchanged the direction of reference line X parallel to the direction of travel of the laser beam incident on the reflecting surface 24 within the plane 28. When the off-axis parabolic reflector 22 is moved along the circular locus 30 from a position A, indicated by continuous lines, through positions B and C, indicated by alternate long and two short dashes lines, while the posture and orientation of the same are fixed, the focus F of the laser beam changes along a circular locus 34 of a diameter equal to that of the locus 30 in a plane 32 parallel to the plane 26, from the initial position F through positions G and H. The speed of movement of the focus of the laser beam along the circular locus 34 is controlled properly for a machining function in the plane 32 by the energy of the laser beam. Accordingly, an objective surface 32 disposed in the plane 32 can be subjected to a machining such as boring.

According to the present invention, the off-axis parabolic reflector 22 is moved two-dimensionally along a circular locus in the plane 28. The operation and control of such two-dimensional movement of the off-axis parabolic reflector 22 requires mechanisms and means which are simpler than those necessary for the operation and control of the same for movement along a circular locus through the combination of the three-dimensional movement of the plurality of movable robot elements of a conventional laser robot.

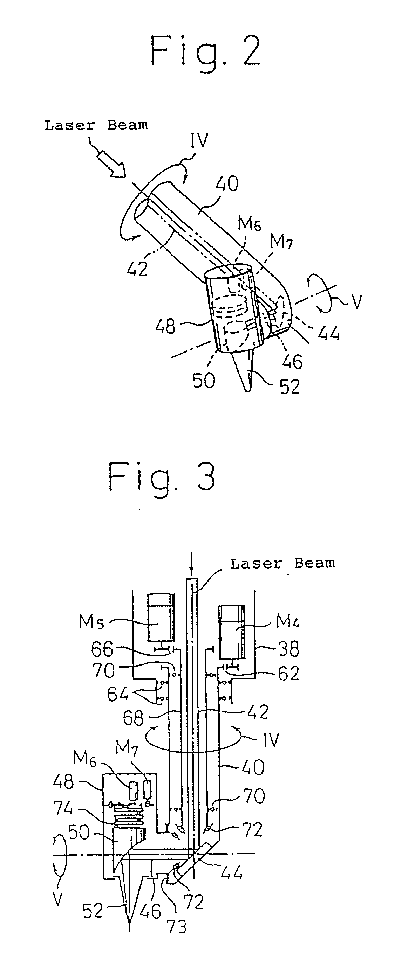

Figure 2 shows a laser beam machining apparatus employing the off-axis parabolic reflector provided on the extremity of the robot arm of an articulated laser robot similar to the five-axis multi-articulated industrial laser robot shown in Fig. 6, for forming a small bore in an objective surface of a work by a laser beam. The second robot arm 40 of the laser robot, which corresponds to the second robot arm 12 of the laser robot shown in Fig. 6, is rotatable about a fourth axis. A laser beam travels along a straight laser beam path 42 from the rear end of the second robot arm 40 toward the extremity of the same, and the laser beam is deflected perpendicularly by a reflecting mirror 44 provided on the extremity of the second robot arm 40 so that the laser beam travels along a laser beam path unit 46, which corresponds to the laser beam path unit 20 shown in Fig. 1, and is incident on the reflecting surface of an off-axis parabolic reflector 50 provided in the laser beam machining apparatus 48. Then, the off-axis parabolic reflector 50 reflects the laser beam so that the laser beam travels through a nozzle 52 and focuses the laser beam on the focal point. The laser beam machining apparatus 48 is able to turn about a fifth axis V on the extremity of the second robot arm 40 and is provided internally with mechanisms and means for moving the off-axis parabolic reflector 50 along a circular locus to move the focus of the laser beam along a circular locus. As will be described in detail hereunder, with reference to Figs. 3 to 5, concretely, the mechanisms and the means are embodied in an automatic tracking locus tracking device capable of adjusting the diameter of the circular locus and including two motors $M_6$ and $M_7$ as drive means.

Figure 3 is a more or less detailed sectional view showing the details of the construction of the second robot arm 40 of the five-axis articulated laser robot shown in Fig. 2, and the internal construction of the laser beam machining apparatus 48. The second robot arm 40 is rotatable on an elbow joint 38 about a fourth axis IV and is provided substantially in its central portion with the laser beam path 42. The second robot arm 40 is supported in bearings 64 and is driven for rotation through a reduction gear 62 by a fourth-axis drive motor M4 provided within the elbow joint 38.

A fifth-axis motor $M_5$ is provided within the elbow joint 38 to drive a hollow shaft 68 supported in bearings 70 within the second robot arm 40 for rotation through a reduction gear 66. The rotation of the hollow shaft 68 is transmitted through a bevel gear mechanism 72 provided at the extremity of the hollow shaft 73 to the laser beam machining apparatus 48 supported in a bearing 73 to turn the laser beam machining apparatus 48 about the fifth axis V relative to the second robot arm 40. The reflecting mirror 44 is fixed to the extremity of the second robot arm 40 so as to reflect the laser beam traveling along the straight laser beam path unit 42 in the direction of a laser beam path 46 perpendicular to the laser beam path 42 so that the laser beam is incident on the parabolic reflecting surface of the off-axis parabolic reflector 50. Naturally, the laser robot is capable of moving the laser beam machining apparatus 48, in the same manner as the conventional laser robot, in a three-dimensional space for laser beam machining, such as cutting or welding, by the laser beam projected through the nozzle 52 by the laser beam machining apparatus 48 by controlling motions about the axes of rotation, because the laser robot has, similar to the conventional laser robot shown in Fig. 6, three degrees of freedom of motion, i.e., rotary motions about a first axis I through a third axis III, not shown, as well as about the fourth axis IV and the fifth axis V. The laser beam machining apparatus 48 of the present invention is capable of readily and automatically forming a bore of a small diameter in the objective surface of a workpiece, which was difficult to achieve through the control of robot actions for laser beam machining, through the operation of a circular-locus tracking and drive means provided in the laser beam machining apparatus 48 to move the focus of the laser beam along a desired circular locus. As stated above, the circular-locus tracking and driving means is provided, as drive means, with the motors $M_6$ and $M_7$, preferably servomotors. The two motors $M_6$ and $M_7$ drive the components of the circular-locus tracking and drive means for the automatic adjustment of the diameter of the circular locus and the automatic tracking of the circular locus of a desired diameter. The off-axis parabolic reflector 50 is supported in a fixed posture and in a fixed orientation within the laser beam machining apparatus 48 by a two-stage parallel linkages 74.

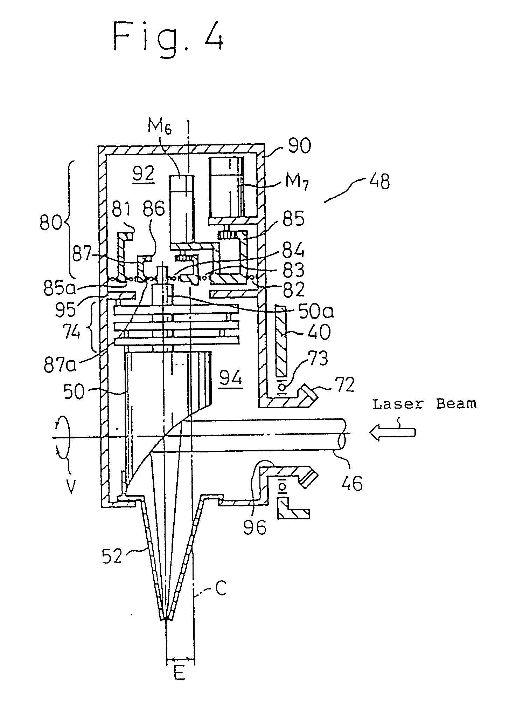

Referring to Fig. 4 showing the laser machining apparatus 48 in an enlarged view, the laser beam machining apparatus 48 has a hollow, cylindrical case 90. Driving means 80 comprising drive means for circular-locus tracking and diameter adjusting means for adjusting the diameter of the circular locus including the motors $M_6$ and $M_7$ is placed in the upper chamber 92 of the case 90. The off-axis parabolic reflector 50 supported by the parallel linkage 74 is placed in a lower chamber 94 formed under an annular partition wall 95. The nozzle 52 for projecting a laser beam therethrough is mounted through a sealing means for preventing the leakage of the laser beam on the bottom wall of the lower chamber 94, so as to be turned together with the off-axis parabolic reflector 50 for circular-locus tracking. An opening 96 is formed in the side wall of the lower chamber 94 to receive the laser beam transmitted along the laser beam path unit 46. The driven bevel gear 72 of the bevel gear mechanism 72 of a rotative driving mechanism for turning the laser beam machining apparatus 48 about the fifth axis V for robot actions is provided on a projection surrounding the opening 96. The upper links of the two-stage parallel linkage 74 are joined pivotally by pivots to the partition wall 95, and the lower links of the same are joined pivotally by pivots to the upper end surface of the off-axis parabolic reflector 50 so that the off-axis parabolic reflector 50 can be translated along a circular locus. The off-axis parabolic reflector 50 has a shaft 50a projecting upward from its upper end surface, and the shaft 50a engages the drive means 80 for circular-locus tracking placed in the upper chamber 92. The drive means 80 comprises a rotary ring 85 provided with an internal gear 81 engaging a pinion fixed to the output shaft of the motor $M_7$ and supported in a first bearing 82 for rotation about an axis $C_1$ of rotation at a rotating speed lower than that of the output shaft of the drive motor $M_7$, an eccentricity adjusting ring 87 provided with an internal gear 86 engaging a pinion fixed to the output shaft of the drive motor $M_6$ and supported for rotation in a second bearing 83 fitted in an eccentric circular opening 85a formed in the bottom of the rotary ring 85, and a third bearing 84 fitted in an eccentric circular opening 87a formed in the bottom of the eccentricity adjusting ring 87. The shaft 50a of the off-axis parabolic reflector 50 is fitted in the third bearing 84. The drive motor $M_6$ for driving the eccentricity adjusting ring 87 is held on a bracket 85b rising from the bottom of the rotary ring 85. When the drive motor $M_7$ drives the rotary ring 85 for rotation about the axis $C_1$ of rotation, the drive motor $M_6$ rotates together with the eccentricity adjusting ring 87 around the axis $C_1$ of rotation.

The function of the thus-constructed drive means 80 will be described hereinafter.

First, the drive motor $M_6$ is operated to drive the eccentricity adjusting ring 87 for rotation. Since the eccentricity adjusting ring 87 rotates relative to the eccentric circular opening 85a in the bearing 83 fitted in the eccentric circular opening 85a of the rotary ring 85, the dislocation E of the shaft 50a of the off-axis parabolic reflector 50 from the axis $C_1$ of rotation varies. The dislocation E corresponds to the radius of a circular locus along which the center of the of-axis parabolic reflector 50 having the shaft 50a revolves about the axis $C_1$ of rotation when the rotary ring 85 is driven for rotation in the first bearing 82 about the axis $C_1$ of rotation by the drive motor $M_7$. As stated above, supported by the parallel linkage 74, the off-axis parabolic reflector 50 revolves around the axis $C_1$ of rotation of the rotary ring 85 without changing the fixed posture and the fixed orientation and, consequently, the focus of the laser beam reflected and focused by the mirror surface of the off-axis parabolic reflector 50 moves in a plane along a circular locus of an adjusted radius. Accordingly, while the off-axis parabolic reflector 50 receives the laser beam, the focus of the laser beam moves along the circular locus for laser beam machining along the circular locus.

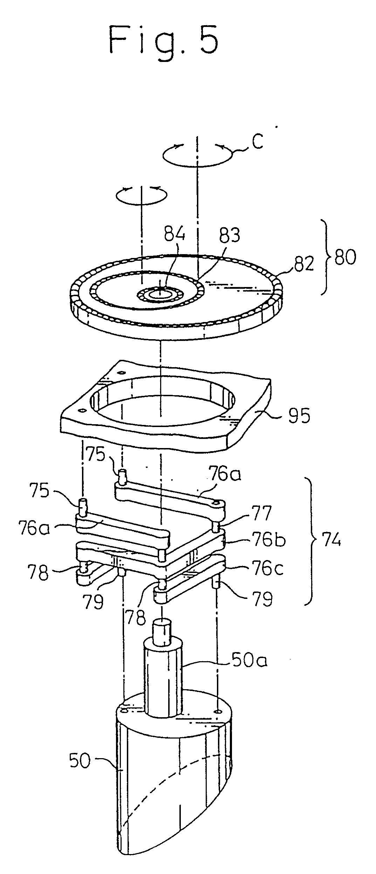

Shown in Fig. 5, in an exploded perspective view, are the first through third bearings 82 to 84 of the driving means 80, the partition wall 95 of the case 90, the upper links 76a pivotally joined by the pivots 75 to the lower surface of the partition wall 95, an intermediate link 76b pivotally joined by pivots 78 to the intermediate link 76b, and the off-axis parabolic reflector 50 pivotally joined by the pivots 78 to the lower links 76c. The parallel linkage 74 has a first-stage linkage comprising the upper links 76a and the intermediate link 76b, and a second stage linkage comprises the intermediate link 76b and the lower links 76c. The first- and second-stage linkages maintain the posture and orientation of the reflecting surface of the off-axis parabolic reflector 50 fixed relative to the incident laser beam during the translation of the off-axis parabolic reflector 50 along the circular locus, and thus the focus of the laser beam focused on the focal point of the off-axis parabolic reflector 50 is moved stably for a laser beam machining along the circular locus of a diameter accurately adjusted by the eccentricity adjusting mechanism.

The laser beam machining method and the laser beam machining apparatus in accordance with the present invention, as described hereinbefore in the preferred embodiments thereof, move the focus of a laser beam projected through the laser beam projecting nozzle along a circular locus, to form a bore having a small diameter in the objective surface of a workpiece. An articulated industrial laser robot provided on the extremity of the robot arm with the laser beam machining apparatus of the present invention is able to achieve a machining operation for forming a bore of a small diameter, simply by adjusting the diameter of the bore without executing a complicated laser beam control procedure including the combination of robot motions, when the articulated laser robot is required to form the small bore in the objective surface of a workpiece, such as a plate, during laser beam machining operation in which the laser beam is controlled through the control of robot motions.

From the foregoing description, it will be understood that, according to the present invention, a small bore can be simply and accurately formed by the laser beam machining, employing a known off-axis parabolic reflector, in which the off-axis parabolic reflector is moved by independent means along a circular locus with the posture and orientation thereof fixed, the radius of the circular locus can be adjusted to form a small bore of a desired diameter, and when necessary, welding along a circular welding line having a small diameter can be comparatively simply achieved at a high accuracy. Particularly, when the laser beam machining apparatus of the present invention is provided on the extremity of the robot arm of a conventional multi-articulated industrial laser robot, the laser beam machining apparatus is operated for laser beam machining to form a bore of a small diameter by drive means separate from the means of the articulated industrial laser robot controlled for robot motions. Therefore, the operation of the laser beam machining apparatus to move the focus of the laser beam along a small circular locus corresponding to the bore of a small diameter requires simple control operation, compared with the control operation for moving the focus of the laser beam along such a small circular locus through the combination of robot motions, and thus the operation of the laser beam machining apparatus can be precisely carried out.

LIST OF REFERENCE CHARACTERS

| | |
|---|---|
| 7 | Robot base |
| 8 | Swivel robot body |
| 9 | Shoulder joint |
| 10 | First robot arm |
| 11 | Elbow joint |
| 12 | Second robot arm |
| 13 | Laser beam projecting nozzle |
| 14 | Workpiece . |
| 15 | Reflecting mirror |
| 16 | Condensing mirror |

| 20, 42, 46 | Laser beam paths |
| 22, 50 | Off-axis parabolic reflector |
| 24 | Reflecting surface |
| 26 | Plane including the optical axis of the laser beam |
| 28 | Plane parallel to the plane including the optical axis of the laser beam |
| 30 | Circular locus |
| 32 | Objective surface |
| 34 | Circular locus |
| 40 | Second robot arm |
| 44 | Reflecting mirror |
| 48 | Laser beam machining apparatus |
| 50a | Projecting shaft |
| 52 | Laser beam projecting nozzle |
| 62 | Reduction gear |
| 64 | Bearing |
| 66 | Reduction gear |
| 68 | Hollow shaft |
| 70 | Bearing |
| 72 | Bevel gear mechanism |
| 73 | Bearing |
| 74 | Parallel linkage |
| 75 | Pivot |
| 76a | Upper link |
| 76b | Intermediate link |
| 76c | Lower link |
| 77 | Pivot |
| 78 | Pivot |
| 79 | Pivot |
| 80 | Drive means |
| 81 | Internal gear |
| 82 | First bearing |
| 83 | Second bearing |
| 84 | Third bearing |
| 85 | Rotary ring |
| 85a | Eccentric circular opening |
| 85b | Bracket |
| 86 | Internal gear |
| 87 | Eccentricity adjusting ring |
| 87a | Eccentric circular opening |
| 90 | Case |
| 90 | Upper chamber |
| 94 | Lower chamber |
| 95 | Partition wall |
| 96 | Opening |
| $M_6$, $M_7$ | Drive motors |

## Claims

1. A laser beam machining method employing an off-axis parabolic reflector, comprising:

   guiding a laser beam emitted by a laser beam source so that the laser beam travels along an optical path and is incident on an off-axis parabolic reflector;

   focusing a laser beam reflected by the off-axis parabolic reflector on an objective surface to be machined;

   moving said off-axis parabolic reflector along a circular locus lying in a plane containing an optical axis of the incident laser beam or in a plane parallel to the former plane without changing an posture and orientation thereof to move a focus of said reflected laser beam for machining on said objective surface along a circular locus of a diameter equal to that of said circular locus along which said off-axis parabolic reflector is moved.

2. A laser beam machining method employing an off-axis parabolic reflector according to claim 1, wherein the optical path of said incident laser beam is fixed while the off-axis parabolic reflector is moved along the circular locus, and the diameter of the circular locus along which said off-axis parabolic reflector is moved is determined so that the laser beam falls continuously on the off-axis parabolic reflector while the off-axis parabolic reflector is moved along the circular locus to form a bore of a small diameter in said objective surface.

3. A laser beam machining apparatus comprising:

   a laser beam path means for guiding a laser beam emitted by a laser beam source to a fixed path of incidence;

   an off-axis parabolic reflector provided with a parabolic reflecting surface to receive a laser beam through the laser beam path means;

   a mirror holding unit for holding a mirror body of said off-axis parabolic reflector in a fixed posture and orientation; and

   drive means for moving the off-axis reflector held by the mirror holding unit along a circular locus lying in a plane containing an optical axis of an incident laser beam or in a plane parallel to the former plane;

   whereby the focus of the reflected laser beam reflected by said off-axis parabolic reflector is moved for machining on an objective surface to be machined, along a circular locus of a diameter equal to that of the circular locus along which the off-axis parabolic reflector is moved.

4. A laser beam machining apparatus employing an off-axis parabolic reflector according to claim 3, wherein the mirror holding unit holding the off-axis parabolic reflector comprises a two-stage parallel linkage including parallel movable links placed one above another, one end of the parallel linkage being joined pivotally to the off-axis parabolic reflector, and the other end thereof being joined pivotally to an appropriate fixed frame.

5. A laser beam machining apparatus employing an off-axis parabolic reflector according to claim 3 or 4, wherein said drive means comprises:

eccentric revolving means for revolving the center axis of the mirror body of said off-axis parabolic reflector about a fixed axis with an eccentricity; and

locus adjusting means for adjusting a radius of said circular locus through an adjustment of the eccentricity.

6. A laser beam machining apparatus employing an off-axis parabolic reflector according to claim 5, wherein said eccentric revolving means and said locus adjusting means are provided respectively with motors as drive means.

7. A laser beam machining apparatus employing an off-axis parabolic reflector according to claim 6, wherein said motors are servomotors.

8. A laser beam machining apparatus employing an off-axis parabolic reflector according to claim 3, wherein said laser beam path means includes an optical conduit means and reflecting mirrors provided in a five-axis multi-articulated industrial robot, and wherein said off-axis parabolic reflector, said mirror holding unit and said drive means are mounted internally and held on the extremity of the robot arm of the articulated industrial robot.

# Fig.1

# Fig. 2

# Fig. 3

# Fig. 4

# Fig. 5

Fig. 6
(PRIOR ART)

# INTERNATIONAL SEARCH REPORT

International Application No PCT/JP90/00254

## I. CLASSIFICATION OF SUBJECT MATTER (if several classification symbols apply, indicate all) 6

According to International Patent Classification (IPC) or to both National Classification and IPC

Int. Cl$^5$ B23K26/08

## II. FIELDS SEARCHED

Minimum Documentation Searched 7

| Classification System | Classification Symbols |
|---|---|
| IPC | B23K26/00 - 26/18 |

Documentation Searched other than Minimum Documentation
to the Extent that such Documents are Included in the Fields Searched 8

| | |
|---|---|
| Jitsuyo Shinan Koho | 1926 - 1989 |
| Kokai Jitsuyo Shinan Koho | 1971 - 1989 |

## III. DOCUMENTS CONSIDERED TO BE RELEVANT 9

| Category* | Citation of Document, 11 with indication, where appropriate, of the relevant passages 12 | Relevant to Claim No. 13 |
|---|---|---|
| A | JP, A, 56-47289 (Hitachi, Ltd.), 28 April 1981 (28. 04. 81), Line 8, column 5 to line 17, column 6 & US, A, 4,367,017 | 1 - 8 |

* Special categories of cited documents: 10

"A" document defining the general state of the art which is not considered to be of particular relevance

"E" earlier document but published on or after the international filing date

"L" document which may throw doubts on priority claim(s) or which is cited to establish the publication date of another citation or other special reason (as specified)

"O" document referring to an oral disclosure, use, exhibition or other means

"P" document published prior to the international filing date but later than the priority date claimed

"T" later document published after the international filing date or priority date and not in conflict with the application but cited to understand the principle or theory underlying the invention

"X" document of particular relevance; the claimed invention cannot be considered novel or cannot be considered to involve an inventive step

"Y" document of particular relevance; the claimed invention cannot be considered to involve an inventive step when the document is combined with one or more other such documents, such combination being obvious to a person skilled in the art

"&" document member of the same patent family

## IV. CERTIFICATION

| Date of the Actual Completion of the International Search | Date of Mailing of this International Search Report |
|---|---|
| May 16, 1990 (16. 05. 90) | May 28, 1990 (28. 05. 90) |

| International Searching Authority | Signature of Authorized Officer |
|---|---|
| Japanese Patent Office | |

Form PCT/ISA/210 (second sheet) (January 1985)